**Europäisches Patentamt**

**European Patent Office**

**Office européen des brevets**

(19)

(11) Veröffentlichungsnummer : **0 380 006 B1**

(12)

# EUROPÄISCHE PATENTSCHRIFT

(45) Veröffentlichungstag der Patentschrift :
01.09.93 Patentblatt 93/35

(51) Int. Cl.$^5$ : **C08F 20/12, C09D 133/06**

(21) Anmeldenummer : **90101149.4**

(22) Anmeldetag : **20.01.90**

(54) **Niedermolekulare Polymerisate von Acrylsäureestern.**

(30) Priorität : **27.01.89 DE 3902440**

(43) Veröffentlichungstag der Anmeldung :
**01.08.90 Patentblatt 90/31**

(45) Bekanntmachung des Hinweises auf die
Patenterteilung :
**01.09.93 Patentblatt 93/35**

(84) Benannte Vertragsstaaten :
**BE CH DE ES GB IT LI NL**

(56) Entgegenhaltungen :
**DE-A- 2 161 909**
**US-A- 4 276 432**

(73) Patentinhaber : **BASF Aktiengesellschaft**
**Carl-Bosch-Strasse 38**
**D-67063 Ludwigshafen (DE)**

(72) Erfinder : **Bobar, Georg**
**Kraehhoehlenweg 19 a**
**D-6702 Bad Duerkheim (DE)**
Erfinder : **Schnell, Klaus**
**Kranichstrasse 9**
**D-6700 Ludwigshafen (DE)**
Erfinder : **Schroeder, Gerd, Dr.**
**Hardenburgstrasse 6**
**D-6703 Limburgerhof (DE)**
Erfinder : **Wistuba, Eckehardt, Dr.**
**Im Obergarten 7**
**D-6702 Bad Duerkheim (DE)**

## Beschreibung

Die vorliegende Erfindung betrifft niedermolekulare Polymerisate von Acrylsäureestern, dadurch erhältlich, daß man

a) 80 bis 100 Gew.-% mindestens eines Acrylsäureesters eines $C_1$- bis $C_8$-Alkanols (Monomere I) und
b) 0 bis 20 Gew.-% sonstige copolymerisierbare Monomere (Monomere II)

in einem Druckgefäß bei Temperaturen von 130 bis 140°C in iso-propanolischer Lösung radikalisch so polymerisiert, daß man 70 bis 95 Gew.-% des Lösemittels vorlegt und den Rest des Polymerisationsansatzes innerhalb von 3 bis 7 h in getrennten Zuläufen, von denen einer die Monomeren enthält, kontinuierlich zuführt und nach beendeter Polymerisation das Lösemittel im Vakuum abdestilliert, wobei der auf die Monomeren bezogene Gewichtsanteil des Lösemittels 5 bis 15 Gew.-%, der auf die Monomeren bezogene Gewichtsanteil der Initiatoren 0,5 bis 3 Gew.-% und die Halbwertszeit der Initiatoren bei Polymerisationstemperatur 10 sec bis 3 h betragen.

Weiterhin betrifft die Erfindung die Herstellung dieser niedermolekularen Polymerisate und ihre Verwendung als äußere Weichmacher.

Es ist allgemein bekannt, daß bei der radikalischen Polymerisation in Lösung Polymerisate mit niederem Molekulargewicht erhältlich sind, indem man größere Mengen an Polymerisationsinitiatoren oder Molekulargewichtsregler wie Mercaptane zusetzt oder als Molekulargewichtsregler wirkende Lösemittel verwendet. Im allgemeinen verbleiben jedoch die Bestandteile dieser Initiatoren oder Molekulargewichtsregler chemisch gebunden im Polymerisat, wodurch die Eigenschaften der Polymerisate gewöhnlich beeinträchtigt werden oder die Polymerisate den Anforderungen an Reinheit und Geruchsfreiheit nicht genügen.

Die US-4075242 und die JP-52155691 betreffen Verfahren zur Herstellung von niedermolekularen Polymerisaten von Acrylsäureestern, die dadurch gekennzeichnet sind, daß die Polymerisation in hochsiedendend organischen Lösemitteln bei Temperaturen oberhalb von 150°C durchgeführt wird. Wie festgestellt wurde, bewirkt die thermische Beanspruchung einer vollständigen destillativen Abtrennung dieser hochsiedenden Lösemittel Verfärbungen der Polymerisate, was bei ihrer Verwendung als äußere Weichmacher häufig von Nachteil ist. Außerdem führen höhere Polymerisationstemperaturen gewöhnlich zu unerwünscht breiten Molekulargewichtsverteilungen.

Die SU-931188 betrifft ein Verfahren zur Herstellung von lösemittelfreien, farb- und geruchlosen niedermolekularen Polyacrylaten, das dadurch gekennzeichnet ist, daß, bezogen auf die Monomeren, iso-Propanol im Überschuß unter Rückfluß (79 bis 89°C) als Lösemittel eingesetzt wird. Wie festgestellt wurde, sind die nach diesem Verfahren erhältlichen Polyacrylate zwar farblos, aber nicht geruchsfrei. Der Geruch ist vermutlich auf den gebildeten Anteil an Oligomeren zurückzuführen.

Der vorliegenden Erfindung lag daher die Aufgabe zugrunde, niedermolekulare Polymerisate von Acrylsäureestern zur Verfügung zu stellen, die die genannten Mängel nicht aufweisen und insbesondere als äußere Weichmacher geeignet sind.

Demgemäß wurden die eingangs definierten Polymerisate und das hierdurch definierte Verfahren zu ihrer Herstellung sowie deren Verwendung als äußere Weichmacher gefunden.

Als Monomere I werden mit Vorteil die Ester der Acrylsäure einpolymerisiert, die sich von den Alkanolen Ethanol, iso-Propanol, n- und iso-Butanol, n-Hexanol sowie 2-Ethylhexanol ableiten, wobei die Ester des n-Butanols und des 2-Ethylhexanols besonders bevorzugt sind.

Als Monomere II sind insbesondere Ester der Methacrylsäure, die sich von 1 bis 8 C-Atomen enthaltenden Alkanolen ableiten sowie Vinylester von Alkansäuren mit 2 bis 6 Kohlenstoffatomen und vinylaromatische Monomere wie Styrol von Interesse. Bevorzugte Methacrylsäureester sind Methylmethacrylat und n-Butylmethacrylat, während unter den Vinylestern Vinylacetat und Vinylpropionat bevorzugt werden. Bei einer Verwendung von Gemischen aus Monomeren I und Monomeren II wird die Zusammensetzung mit Vorteil so gewählt, daß ein aus diesen Monomeren aufgebautes Polymerisat eine Glastemperatur $T_g$ von -65 bis -20°C aufweist. Nach Fox (T. G. Fox, Bull. Am. Phys. Soc. (Ser. II) $\underline{1}$, 123 (1956)) gilt für die Glastemperatur von Mischpolymerisaten in guter Näherung:

$$\frac{1}{T_g} = \frac{x^1}{T_g^1} + \frac{x^2}{T_g^2} + \ldots\ldots \frac{x^n}{T_g^n}$$

wobei $x^1$, $x^2$, ....., $x^n$ die Massenbrüche der Monomeren 1, 2, ...., n und $T_g^1$, $T_g^2$, ...., $T_g^n$ die Glastemperaturen der jeweils nur aus einem der Monomeren 1, 2, ...., oder n aufgebauten Polymerisate in Grad Kelvin bedeuten. Die Glastemperaturen dieser Homopolymerisate der oben aufgeführten Monomeren I und II sind bekannt und z.B. in J. Brandrup, E. H. Immergut, Polymer Handbook 1st Ed. J. Wiley, New York 1966 und 2nd Ed. J. Wiley, New York 1975, aufgeführt. Bevorzugt werden jedoch Polymerisate einer $T_g$ von -65 bis -20°C, die nur aus Monomeren I aufgebaut sind, wobei die Homopolymerisate des n-Butylacrylats sowie des 2-Ethylhexylacrylats be-

2

sonders bevorzugt werden.

Neben iso-Propanol kann das Polymerisationsmedium bis zu 5 Gew.-% mit iso-Propanol mischbare Flüssigkeiten, z.B. andere niedere Alkohole wie tert.-Butanol, enthalten. Bevorzugt wird jedoch reines iso-Propanol eingesetzt. Die Gesamtmenge an eingesetztem Lösemittel beträgt auf die Monomeren bezogen 5 bis 15, bevorzugt 8 bis 12 Gew.-%.

Als Initiatoren können alle diejenigen verwendet werden, die im Reaktionsmedium in ausreichender Weise löslich oder flüssig sind und deren Halbwertszeit bei Polymerisationstemperatur 10 sec bis 3 h beträgt. Als besonders geeignete Initiatoren haben sich tert.-Butyl-per-2-ethylhexanoat, tert.-Butylperbenzoat, 2,5-Dimethylhexan-2,5-di-tert.-butylperoxid, Di-tert.-butylperoxid und Azo-bis-(isobutyronitril) erwiesen.

Die angewandten Mengen an Initiatoren betragen auf die Monomeren bezogen 0,5 bis 3 Gew.-%. Bei Polymerisationstemperatur rasch zerfallende Initiatoren werden vorzugsweise in Mengen im Bereich der unteren (z.B. tert.-Butyl-per-2-ethylhexanoat in Mengen von 0,5 bis 1 Gew.-%) und bei Polymerisationstemperatur langsam zerfallende Initiatoren in Mengen im Bereich der oberen Grenze (z.B. Di-tert.-butylperoxid in Mengen von 2 bis 3 Gew.-%) zugegeben. Mit besonderem Vorteil werden Gemische verschiedener Initiatoren eingesetzt, wobei Mischungen aus relativ rasch und relativ langsam zerfallenden Initiatoren besonders bevorzugt sind, da bei ihrer Anwendung im allgmeinen Polymerisate erhalten werden, die besonders wenig Restmonomere enthalten.

Die radikalische Lösungspolymerisation wird in einem Druckgefäß in Form eines Zulaufverfahrens durchgeführt. 70 bis 95 Gew.-% bevorzugt 85 bis 90 Gew.-% des Lösemittels werden vorgelegt, auf die Polymerisationstemperatur von 130 bis 140°C erhitzt und anschließend innerhalb von 3 bis 7 h unter Aufrechterhaltung der Polymerisationstemperatur, die vorzugsweise 135°C beträgt, kontinuierlich mit dem Rest des Polymerisationsansatzes in getrennten Zuläufen, von denen einer die Monomeren enthält, versetzt. Dabei wird die Monomermischung bevorzugt in reiner Form zugegeben, während die Initiatoren bevorzugt in der verbliebenen Menge Lösemittel gelöst zugeführt werden. Im wesentlichen werden die Monomeren und die Initiatoren synchron zugeführt. Unter dem Gesichtspunkt eines besonders geringen Gehaltes an Restmonomeren ist es jedoch von Vorteil, den Zulauf der Initiatoren so zu steuern, daß er etwa 20 bis 40 min länger dauert als der Monomerenzulauf. Des weiteren ist es von Vorteil, die Polymerisationstemperatur konstant auf 135°C zu halten. Zur Vervollständigung des Umsatzes wird nach beendetem Zulauf zweckmäßigerweise noch 1 bis 2 h nachpolymerisiert. Anschließend wird abgekühlt und das Lösemittel im Vakuum in an sich bekannter Weise abdestilliert. Hierbei ist es von Vorteil, daß, bezogen auf die Menge der Monomeren, bei dem erfindungsgemäßen Verfahren eine geringere Lösemittelmenge benötigt wird, als beim Verfahren der SU-931188. Die so erhältlichen, unter Normalbedingungen flüssigen Polymerisate sind lösemittel- und geruchsfrei, sowie farblos und transparent. Ihr gelpermeationschromatographisch bestimmtes gewichtsmittleres Molekulargewicht $\overline{M}_w$ (Eichsubstanz: Lineares Polystyrol) beträgt 7500 bis 30 000, der zugehörige Polymolekularitätsindex Q liegt bei 1,5 bis 3,0. Q ist das Verhältnis von gewichtsmittlerem Molekulargewicht $\overline{M}_w$ zu zahlenmittlerem Molekulargewicht $\overline{M}_n$ und stellt ein Maß für die Breite der Molekulargewichtsverteilung dar. Außerdem sind die erfindungsgemäßen Polymerisate besonders arm an Oligomeren. Der Gewichtsanteil G der Moleküle mit einem Molekulargewicht unterhalb von 500 beträgt weniger als 0,5 Gew.-%. Die dynamischen Viskositäten der erfindungsgemäßen Polymerisate sind vergleichsweise niedrig und betragen bei 23°C 10 bis 60 Pa·s (Bestimmt nach DIN 53019 mit einem Rotationsviskosimeter vom Typ "Searle", bei einem Geschwindigkeitsgefälle von 150 $s^{-1}$). Diese vergleichsweise niedrigen Viskositäten werden unter anderem darauf zurückgeführt, daß unter den beschriebenen Reaktionsbedingungen in die Polymerisate nur in geringem Ausmaß Nicht-Monomere Bausteine eingebaut werden, wodurch besonders endgruppenarme Polymerisate erhalten werden, die beispielsweise eine niedrige Säure- und Hydroxylzahl aufweisen. Die Säurezahl gibt an, wieviel mg KOH benötigt werden, um die in 1 g Polymerisat enthaltenen Säurefunktionen zu neutralisieren und die Hydroxylzahl weist aus, wieviel mg KOH der bei der Acetylierung von 1 g Polymerisat gebundenen Menge Essigsäure äquivalent ist.

Die erfindungsgemäßen Polymerisate sind vielseitig verwendbare äußere Weichmacher, die mit zahlreichen anderen Polymeren gut verträglich (homogen mischbar) sind. Aufgrund von Verseifungsbeständigkeit, Schwerflüchtigkeit, Lichtechtheit, Wasserfestigkeit, Wetterbeständigkeit, geringer Migrationsneigung bei gleichzeitig niedriger Eigenviskosität und ausgeprägtem eigenem Bindevermögen, werden die erfindungsgemäßen Polymerisate bevorzugt als Weichmacher in Beschichtungsmassen auf Kunstharzbasis eingesetzt, in welchen andere Polymere in fester Form, in Lösung oder in disperser Verteilung als Bindemittel enthalten sind. Beispiele für derartige Beschichtungsmessen sind Lacke und Farben. Weiterhin können die erfindungsgemäßen Polymerisate als Weichmacher in Dichtungsmassen, Klebstoffen und anderen Kunststoffzubereitungen, z.B. extrudierbaren Verbundwerkstoffen eingesetzt werden.

Beispiele

Beispiel 1

Herstellung von niedermolekularem Poly-n-Butylacrylat

In einem Druckgefäß wurden 2 kg iso-Propanol auf 135°C erhitzt und anschließend unter Aufrechterhaltung dieser Temperatur innerhalb von 5 h unter Rühren mit 20 kg n-Butylacrylat versetzt. Parallel zum Monomerenzulauf wurde über eine Zeitdauer von 5 h 15 min eine Lösung von 76,6 g tert.-Butyl-per-2-ethylhexanoat und 76,6 g Di-tert.-butylperoxid in 405,4 g iso-Propanol zugeführt. Nach beendeter Zufuhr wurde die Polymerisation noch 2 h fortgesetzt. Anschließend wurde das Lösemittel durch Vakuumdestillation abgetrennt. Tabelle 1 gibt die Eigenschaften des erhaltenen Poly-n-Butylacrylats B1 wieder. Als Ergänzung zu den gelpermeationschromatographisch bestimmten Werten $\overline{M}_w$, Q und G enthält Tabelle 1 das kryoskopisch in Naphthalin bestimmte Molekulargewicht $\overline{M}$. Zusätzlich zeigt Tabelle 1 die Eigenschaften zweier zum Vergleich hergestellter Poly-n-Butylacrylate V1 und V2. V1 wurde gemäß Beispiel 1 aus der SU-931188 hergestellt, wobei jedoch n-Butylacrylat als Monomeres eingesetzt wurde und V2 entspricht Beispiel 2 aus der SU-931188.

Tabelle 1

|  | B1 | V1 | V2 |
|---|---|---|---|
| $\overline{M}$ | 2820 | 2660 | 2760 |
| $\overline{M}_w$ | 14238 | 13278 | 17462 |
| Q | 2,56 | 2,67 | 3,31 |
| G | 0,428 | 1,26 | 1,33 |
| Viskosität | 19 Pa·s |  |  |
| Säurezahl | 0,1 |  |  |
| Hydroxylzahl | 7 |  |  |

Beispiel 2

Prüfung der Verträglichkeit zwischen verschiedenen als Bindemittel geeigneten Polymeren und B1

Die Verträglichkeitsprüfung wurde in Anlehnung an die DIN 55954 durchgeführt. Die auf Verträglichkeit zu prüfenden Bindemittel, die ein gewichtsmittleres Molekulargewicht von 30 000 bis 80 000 aufwiesen, wurden mit B1 im Gewichtsverhältnis Bindemittel:B1 = 75:25 in verschiedenen Lösemitteln gelöst (Gesamtfeststoffgehalt der Lösungen = 35 Gew.-%) und diese Lösungen auf Glasplatten in 0,2 mm Naßschichtdicke aufgetragen. Die beschichteten Glasplatten wurden 28 Tage bei Normklima (23°C, 50 % r.F.) und daran anschließend noch 24 h bei 50°C und 50 % r.F. getrocknet. Als Beurteilungskriterium für die Verträglichkeit diente das Ausmaß der Trübung, die die beim Trocknen gebildeten Filme aufwiesen. Die Ergebnisse enthält Tabelle 2

Tabelle 2

| Bindemittel aufgebaut aus | | Lösemittel | Verträglichkeit |
|---|---|---|---|
| A) | 75 Gew.-% Vinylchlorid<br>25 Gew.-% Vinyl-iso-butylether | Xylol nach DIN 51633 | homogen mischbar |
| B) | 35 Gew.-% iso-Butylmethacrylat<br>27 Gew.-% tert.-Butylacrylat<br>30 Gew.-% Styrol<br>8 Gew.-% n-Laurylacrylat | Testbenzin nach<br>DIN 51632 | homogen mischbar |
| C) | 70 Gew.-% Styrol<br>20 Gew.-% iso-Butylacrylat<br>5 Gew.-% Acrylsäure<br>5 Gew.-% n-Butylacrylat | Xylol nach DIN 51633<br>und n-Butanol im<br>Gewichtsverhältnis 9:1 | homogen mischbar |
| D) | 70 Gew.-% Vinylchlorid<br>29 Gew.-% Vinylpropionat | n-Butylacetat | homogen mischbar |

Beispiel 3

Untersuchung der weichmachenden Wirkung von B1

Diese Untersuchung wurde in Anlehnung an die DIN 53157 durchgeführt. Die Bindemittel A) bis D) aus Beispiel 2 und das Polymerisat B1 wurden mit verschiedenen Gewichtsverhältnissen in denselben Lösemitteln wie in Beispiel 2 gelöst (Gesamtfeststoffgehalt der Lösungen = 35 Gew-%) und wie in Beispiel 2 verfilmt. Anschließend wurde mit dem Pendelgerät nach König (DIN 53157) das Dämpfungsverhalten der erhaltenen Kunstharzfilme bestimmt.

Tabelle 3 gibt die Zeiten t wieder, die das Pendel benötigte, bis der Pendelausschlag erstmals gleich oder kleiner als 3° war.

Tabelle 3

| Bindemittel | Gewichtsverhältnis (Bindemittel:B1) | t (sec) |
|---|---|---|
| A | 10:0 | 189 |
|   | 9:1 | 174 |
|   | 8:2 | 150 |
|   | 7:3 | 106 |
| B | 10:0 | 158 |
|   | 9:1 | 133 |
|   | 8:2 | 92 |
|   | 7:3 | 55 |
| C | 10:0 | 192 |
|   | 9:1 | 186 |
|   | 8:2 | 169 |
|   | 7:3 | 140 |
| D | 10:0 | 195 |
|   | 9:1 | 178 |
|   | 8:2 | 157 |
|   | 7:3 | 116 |

**Patentansprüche**

**Patentansprüche für folgende Vertragsstaaten : BE, CH, DE, GB, IT, LI, NL**

1. Niedermolekulare Polymerisate von Acrylsäureestern, dadurch erhältlich, daß man
   a) 80 bis 100 Gew.-% mindestens eines Acrylsäureesters eines $C_1$- bis $C_8$-Alkanols (Monomere I) und
   b) 0 bis 20 Gew.-% sonstige copolymerisierbare Monomere (Monomere II)
   in einem Druckgefäß bei Temperaturen von 130 bis 140°C in iso-propanolischer Lösung radikalisch so polymerisiert, daß man 70 bis 95 Gew.-% des Lösemittels vorlegt und den Rest des Polymerisationsansatzes innerhalb von 3 bis 7 h in getrennten Zuläufen, von denen einer die Monomeren enthält, kontinuierlich zuführt und nach beendeter Polymerisation das Lösemittel im Vakuum abdestilliert, wobei der auf die Monomeren bezogene Gewichtsanteil des Lösemittels 5 bis 15 Gew.-%, der auf die Monomeren bezogene Gewichtsanteil der Initiatoren 0,5 bis 3 Gew.-% und die Halbwertszeit der Initiatoren bei Polymerisationstemperatur 10 sec bis 3 h betragen.

2. Verfahren zur Herstellung niedermolekularer Polymerisate von Acrylsäureestern durch radikalische Lösungspolymerisation in iso-propanolischer Lösung und anschließende destillative Abtrennung des Lösemittels, dadurch gekennzeichnet, daß man in einem Druckgefäß 70 bis 95 Gew.-% des Lösemittels vorlegt, auf die Polymerisationstemperatur von 130 bis 140°C erhitzt und anschließend innerhalb von 3 bis 7 h unter Aufrechterhaltung der Polymerisationstemperatur den Rest des Polymerisationsansatzes in getrennten Zuläufen, von denen einer die Monomeren enthält, kontinuierlich zuführt, wobei der auf die Monomeren bezogene Gewichtsanteil des Lösemittels 5 bis 15 Gew.-%, der auf die Monomeren bezogene Gewichtsanteil der Initiatoren 0,5 bis 3 Gew.-% und die Halbwertszeit der Initiatoren bei Polymerisationstemperatur 10 sec bis 3 h beträgt.

3. Verwendung der Polymerisate gemäß Anspruch 1 als äußere Weichmacher in Beschichtungsmassen auf Kunstharzbasis.

**Patentansprüche für folgenden Vertragsstaat : ES**

1. Verfahren zur Herstellung niedermolekularer Polymerisate von Acrylsäureestern durch radikalische Lösungspolymerisation in iso-propanolischer Lösung und anschließende destillative Abtrennung des Lösemittels, dadurch gekennzeichnet, daß man in einem Druckgefäß 70 bis 95 Gew.-% des Lösemittels vorlegt, auf die Polymerisationstemperatur von 130 bis 140°C erhitzt und anschließend innerhalb von 3 bis 7 h unter Aufrechterhaltung der Polymerisationstemperatur den Rest des Polymerisationsansatzes in getrennten Zuläufen, von denen einer die Monomeren enthält, kontinuierlich zuführt, wobei der auf die Monomeren bezogene Gewichtsanteil des Lösemittels 5 bis 15 Gew.-% der auf die Monomeren bezogene Gewichtsanteil der Initiatoren 0,5 bis 3 Gew.-% und die Halbwertszeit der Initiatoren bei Polymerisationstemperatur 10 sec bis 3 h beträgt.

2. Verwendung der nach einem Verfahren gemäß Anspruch 1 hergestellten Polymerisate von Acrylsäureestern als äußere Weichmacher in Beschichtungsmassen auf Kunstharzbasis.

**Claims**

**Claims for the following Contracting States : BE, CH, DE, GB, IT, LI, NL**

1. Low molecular weight polymers of acrylic esters, obtainable by free-radically polymerizing
   a) from 80 to 100% by weight of at least one acrylic eater of a $C_1$-$C_8$-alkanol (monomer I) and
   b) from 0 to 20% by weight of other copolymerizable monomers (monomer II)
   in a pressure vessel at from 130 to 140°C in an isopropanol solution by introducing from 70 to 95% by weight of the solvent as initial charge and continuously adding the remainder of the polymerization batch over 3-7 h in separate streams, of which one contains the monomers, and, after the polymerization has ended, distilling off the solvent under reduced pressure, the weight proportion of the solvent, based on the monomers, being from 5 to 15% by weight, the weight proportion of the initiators, based on the monomers, being from 0.5 to 3% by weight, and the half-life of the initiators at the polymerization temperature being from 10 sec to 3 h.

2. A process for preparing low molecular weight polymers of acrylic esters by free radical solution polymerization in an isopropanol solution and subsequent distillative removal of the solvent, which comprises charging a pressure vessel with from 70 to 95% by weight of the solvent, heating to the polymerization temperature of from 130 to 140°C and then over 3-7 h, while the polymerization temperature is maintained, continuously adding the remainder of the polymerization batch in separate streams, of which one contains the monomers, the weight proportion of the solvent, based on the monomers, being from 5 to 15% by weight, the weight proportion of the initiators, based on the monomers, being from 0.5 to 3% by weight, and the half-life of the initiators at the polymerization temperature being from 10 sec to 3 h.

3. The use of the polymers of claim 1 as external plasticizers in coating compositions based on synthetic resins.

**Claims for the following Contracting State : ES**

1. A process for preparing low molecular weight polymers of acrylic esters by free radical solution polymerization in an isopropanol solution and subsequent distillative removal of the solvent, which comprises charging a pressure vessel with from 70 to 95% by weight of the solvent, heating to the polymerization temperature of from 130 to 140°C and then over 3-7 h, while the polymerization temperature is maintained, continuously adding the remainder of the polymerization batch in separate streams, of which one contains the monomers, the weight proportion of the solvent, based on the monomers, being from 5 to 15% by weight, the weight proportion of the initiators, based on the monomers, being from 0.5 to 3% by weight, and the half-life of the initiators at the polymerization temperature being from 10 sec to 3 h.

**2.** The use of the acrylic ester polymers prepared by a process as claimed in claim 1 as external plasticizers in coating compositions based on synthetic resins.

**Revendications**

**Revendications pour les Etats contractants suivants : BE, CH, DE, GB, IT, LI, NL**

**1.** Polymères d'esters de l'acide acrylique, de faible poids moléculaire, que l'on peut obtenir pour autant que l'on polymérise

a) 80 à 100% en poids d'au moins un ester de l'acide acrylique d'un alcanol en $C_1$ à $C_8$ (monomère I) et

b) 0 à 20% en poids d'autres monomères copolymérisables (monomère II)

dans un récipient résistant à la pression, à des températures de 130 à 140°C, en solution isopropanolique, par voie radicalaire, en une manière telle que l'on introduise au préalable 70 à 95% en poids du solvant dans le récipient de polymérisation et que l'on y introduise alors de manière continue le reste de la masse de polymérisation en l'espace de 3 à 7 heures, sous forme d'additifs séparés dont l'un contient les monomères et, une fois la polymérisation achevée, on chasse le solvant par distillation sous vide, où la fraction pondérale du solvant, rapportée aux monomères, atteint 5 à 15% en poids, la fraction pondérale des amorceurs, rapportée aux monomères, atteint 0,5 à 3% en poids et la demi-durée de vie des amorceurs varie de 10 secondes à 3 heures à la température de polymérisation.

**2.** Procédé de préparation de polymères d'esters de l'acide acrylique, de faible poids moléculaire, par la polymérisation en solution radicalaire dans une solution isopropanolique et séparation subséquente par distillation du solvant, caractérisé en ce que l'on introduit au préalable 70 à 95% en poids du solvant dans un récipient résistant à la pression, on le chauffe jusqu'à la température de polymérisation de 130 à 140°C et on y introduit ensuite continuellement, en l'espace de 3 à 7 heures et sous maintien de la température de polymérisation, le reste de la masse de polymérisation en deux additifs séparés dont l'un contient les monomères, où la fraction pondérale du solvant, rapportée aux monomères, atteint 5 à 15% en poids, la fraction pondérale des amorceurs, rapportée aux monomères, atteint 0,5 à 3% en poids et la demi-durée de vie des amorceurs varie de 10 secondes à 3 heures à la température de polymérisation.

**3.** Utilisation des polymères selon la revendication 1, à titre de plastifiants externes dans des masses ou matières de revêtement à base de résines de synthèse.

**Revendications pour l'Etat contractant suivant : ES**

**1.** Procédé de préparation de polymères d'esters de l'acide acrylique, de faible poids moléculaire, par la polymérisation en solution radicalaire dans une solution isopropanolique et séparation subséquente par distillation du solvant, caractérisé en ce que l'on introduit au préalable 70 à 95% en poids du solvant dans un récipient résistant à la pression, on le chauffe jusqu'à la température de polymérisation de 130 à 140°C et on y introduit ensuite continuellement, en l'espace de 3 à 7 heures et sous maintien de la température de polymérisation, le reste de la masse de polymérisation en deux additifs séparés dont l'un contient les monomères, où la fraction pondérale du solvant, rapportée aux monomères, atteint 5 à 15% en poids, la fraction pondérale des amorceurs, rapportée aux monomères, atteint 0,5 à 3% en poids et la demi-durée de vie des amorceurs varie de 10 secondes à 3 heures à la température de polymérisation.

**2.** Utilisation des polymères d'esters de l'acide acrylique préparés par mise en oeuvre du procédé selon la revendication 1, à titre de plastifiants externes dans des matières ou masses de revêtement à base de résines de synthèse.